(19) Europäisches Patentamt / European Patent Office / Office européen des brevets

(11) **EP 3 575 356 B1**

(12) **EUROPEAN PATENT SPECIFICATION**

(45) Date of publication and mention
of the grant of the patent:
**07.10.2020 Bulletin 2020/41**

(51) Int Cl.:
*C08L 9/00* *(2006.01)*    *B60C 1/00* *(2006.01)*
*C01F 7/02* *(2006.01)*    *C08K 3/22* *(2006.01)*
*C08K 3/36* *(2006.01)*    *C08L 9/06* *(2006.01)*

(21) Application number: **19171178.7**

(22) Date of filing: **25.04.2019**

(54) **RUBBER COMPOSITION FOR TYRE TREAD**

KAUTSCHUKZUSAMMENSETZUNG FÜR REIFENPROFIL

COMPOSITION DE CAOUTCHOUC POUR BANDE DE ROULEMENT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **29.05.2018 JP 2018102382**

(43) Date of publication of application:
**04.12.2019 Bulletin 2019/49**

(73) Proprietor: **Sumitomo Rubber Industries, Ltd.
Kobe-shi, Hyogo-ken 651-0072 (JP)**

(72) Inventor: **ITO, Hiroshi
Kobe-shi, Hyogo 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 1 000 965      EP-A1- 2 985 310
EP-A1- 3 081 587      EP-A1- 3 165 566
EP-A1- 3 332 988      US-A1- 2015 011 676**

• **DATABASE WPI Week 200204 Thomson
Scientific, London, GB; AN 2002-029466
XP002792292, & JP 2001 240705 A
(BRIDGESTONE CORP) 4 September 2001
(2001-09-04)**

**Description**

BACKGROUND OF THE INVENTION

Field of the Invention

The present invention relates to a rubber composition for a tread and a pneumatic tire having a tread formed from the rubber composition for a tread.

Description of the Background Art

The tread rubber of a pneumatic tire comes into contact with a road surface, and thus is required to have high wet grip performance from the viewpoint of safety, etc. As a method for improving wet grip performance, a method in which an inorganic filler such as silica is blended into a tread rubber has been well known. As a method for further improving wet grip performance, a method in which aluminum hydroxide is added (for example, Japanese Patent No. 4559573), etc., have also been proposed.

However, when a large amount of aluminum hydroxide is blended into a tread rubber, there is a problem that abrasion resistance, in particular, abrasion appearance after abrasion (that is, a wavy fine-split state) deteriorates.

An object of the present invention is to provide a rubber composition, for a tread, that has improved wet grip performance and abrasion resistance, and a pneumatic tire having a tread formed from the rubber composition for a tread.

SUMMARY OF THE INVENTION

As a result of a thorough study, the present inventor has found that the above problem can be solved by blending aluminum hydroxide having a specific average particle diameter and particle diameter distribution into a diene-based rubber component, and has completed the present invention.

Specifically, the present invention is directed to:

[1] a rubber composition for a tread, the rubber composition containing diene-based rubber and aluminum hydroxide having an average particle diameter (D50) of 0.6 to 1.3 $\mu$m and containing 10% by mass or greater of particles having a particle diameter not less than 3.0 $\mu$m, wherein the aluminum hydroxide is contained in an amount that is not less than 1 part by mass and is less than 10 parts by mass per 100 parts by mass of the diene-based rubber;

[2] the rubber composition for a tread according to [1], wherein the diene-based rubber contains 10% by mass or greater of butadiene rubber;

[3] the rubber composition for a tread according to [1] or [2], further containing 80 parts by mass or greater of silica per 100 parts by mass of the diene-based rubber; and

[4] a pneumatic tire having a tread formed from the rubber composition for a tread according to any one of [1] to [3].

According to the present invention, a rubber composition, for a tread, that has improved wet grip performance and abrasion resistance, and a pneumatic tire having a tread formed from the rubber composition for a tread, are provided.

DESCRIPTION OF THE PREFERRED EMBODIMENTS

A rubber composition that is an embodiment of the present invention contains a diene-based rubber component and aluminum hydroxide having a specific average particle diameter and particle diameter distribution.

<Rubber Component>

Examples of the rubber component used in the present embodiment include diene-based rubbers such as natural rubber (NR), isoprene rubber (IR), butadiene rubber (BR), styrenebutadiene rubber (SBR), styrene-isoprene-butadiene rubber (SIBR), chloroprene rubber (CR), and acrylonitrile butadiene rubber (NBR). Among them, SBR and BR are preferable for the reason that wet grip performance and abrasion resistance are achieved in a balanced manner. One of these rubber components may be used individually, or two or more of these rubber components may be used in combination.

(SBR)

The SBR is not particularly limited, and examples of the SBR include unmodified emulsion-polymerized SBR (E-SBR), unmodified solution-polymerized SBR (S-SBR), and modified SBRs such as modified emulsion-polymerized SBR (modified E-SBR) and solution-polymerized SBR (modified S-SBR) obtained by modifying these unmodified SBRs. In addition, SBRs include an oil-extended type having flexibility adjusted by adding extender oil, and a non-oil-extended type in which no extender oil is added, and any of these types can be used. One of these SBRs may be used individually, or two or more of these SBRs may be used in combination.

Examples of S-SBR that can be used in the present embodiment include products manufactured by and available from JSR Corporation, Sumitomo Chemical Co., Ltd., Ube Industries, Ltd., Asahi Kasei Corporation, Zeon Corporation, etc.

From the viewpoint of wet grip performance and abrasion resistance, the styrene content of the SBR is preferably not less than 20% by mass and more preferably not less than 25% by mass. From the viewpoint of temperature independence of wet grip performance and abrasion resistance, the styrene content of the SBR is preferably not greater than 60% by mass and more preferably not greater than 50% by mass. The styrene content is a value calculated by $^1$H-NMR measurement.

From the viewpoint of wet grip performance, the vinyl content of the SBR is preferably not less than 15% by mass and more preferably not less than 17% by mass. From the viewpoint of temperature independence of wet grip performance, the vinyl content of the SBR is preferably not greater than 65% by mass and more preferably not greater than 63% by mass. The vinyl content (1,2-bond butadiene unit content) is a value measured by infrared absorption spectrometry.

From the viewpoint of wet grip performance, the weight average molecular weight (Mw) of the SBR is preferably not less than 100 thousand, more preferably not less than 150 thousand, and further preferably not less than 250 thousand. From the viewpoint of crosslinking uniformity, etc., the weight average molecular weight (Mw) of the SBR is preferably not greater than 2 million and more preferably not greater than 1 million.

From the viewpoint of wet grip performance, the amount of the SBR in 100% by mass of the diene-based rubber is preferably not less than 50% by mass, more preferably not less than 60% by mass, and further preferably not less than 70% by mass. From the viewpoint of abrasion resistance and low fuel consumption performance, the amount of the SBR is preferably not greater than 90% by mass, more preferably not greater than 85% by mass, and further preferably not greater than 80% by mass. In the case where an oil-extended type SBR is used as the SBR, the amount of the SBR itself as the solid contents contained in the oil-extended type SBR is the amount of the SBR contained in the rubber component.

(BR)

The BR is not particularly limited, and, for example, BRs that are generally used in the tire industry, such as BR having a cis-1,4 bond content of less than 50% (low-cis BR), BR having a cis-1,4 bond content of not less than 90% (high-cis BR), rare-earth element-based butadiene rubber synthesized using a rare-earth element-based catalyst (rare-earth element-based BR), BR containing syndiotactic polybutadiene crystal (SPB-containing BR), and modified BR (high-cis modified BR, low-cis modified BR), can be used. Among these BRs, high-cis BR is preferable for the reason that abrasion resistance is excellent.

Examples of high-cis BR include BR 1220 manufactured by Zeon Corporation, BR 130B, BR 150B, and BR 150L manufactured by Ube Industries, Ltd., and BR 730 manufactured by JSR Corporation. By containing high-cis BR, low-temperature characteristics and abrasion resistance can be improved. Examples of rare-earth element-based BR include BUNA-CB25 manufactured by LANXESS.

Examples of SPB-containing BR do not include BR in which 1,2-syndiotactic polybutadiene crystal is merely dispersed, but include BR in which 1,2-syndiotactic polybutadiene crystal is dispersed in a state of being chemically bound to the BR. Examples of such a SPB-containing BR include VCR-303, VCR-412, and VCR-617 manufactured by Ube Industries, Ltd.

Examples of modified BR include BR that is obtained by polymerizing 1,3-butadiene with a lithium initiator and then adding a tin compound to the polymerized 1,3-butadiene and in which the ends of the modified BR molecules are bound to each other through tin-carbon bonds (tin-modified BR), and butadiene rubber having a condensed alkoxysilane compound at an active end thereof (modified BR for silica). Examples of such a modified BR include BR1250H (tin-modified) manufactured by Zeon Corporation, and an S-modified polymer (modified for silica) manufactured by Sumitomo Chemical Co., Ltd.

From the viewpoint of durability and abrasion resistance, the cis-1,4 bond content (cis content) of the BR is preferably not less than 90% by mass, more preferably not less than 93% by mass, and more preferably not less than 95% by mass. When the cis content is higher, it is considered that polymer chains are more orderly arranged, thus interaction between polymers becomes strong to improve the rubber strength, and abrasion resistance during running on a bad road improves.

From the viewpoint of abrasion resistance, wet grip performance, etc., the weight average molecular weight (Mw) of the BR is preferably not less than 300 thousand, more preferably not less than 350 thousand, and further preferably not less than 400 thousand. From the viewpoint of crosslinking uniformity, etc., the Mw is preferably not greater than 2 million and more preferably not greater than 1 million.

From the viewpoint of abrasion resistance, the amount of the BR in 100% by mass of the diene-based rubber is preferably not less than 10% by mass, more preferably not less than 15% by mass, and further preferably not less than 20% by mass. From the viewpoint of wet grip performance, the amount of the BR is preferably not greater than 50% by mass, more preferably not greater than 40% by mass, and further preferably not greater than 30% by mass.

<Aluminum Hydroxide>

The rubber composition according to the present embodiment contains aluminum hydroxide having a specific average particle diameter (D50) and particle diameter distribution.

By containing the aluminum hydroxide made into particles, the rubber hardness at low temperatures decrease, so that good wet grip performance is achieved. Furthermore, by setting the particle diameter distribution of the aluminum hydroxide to be within a predetermined range, the aluminum hydroxide becomes easily released from a tread rubber and easily cuts through a water film on a road, and the area of contact between the tread rubber and the road surface increases, whereby wet grip performance improves more, and abrasion resistance can also be improved in a balanced manner.

The average particle diameter (D50) of the aluminum hydroxide is not less than 0.6 μm and preferably not less than 0.7 μm. If the average particle diameter is less than 0.6 μm, it is difficult to disperse the aluminum hydroxide, so that abrasion resistance tends to decrease. The average particle diameter (D50) of the aluminum hydroxide is not greater than 1.3 μm, preferably not greater than 1.2 μm, more preferably not greater than 1.1 μm, further preferably not greater than 1.0 μm, and particularly preferably not greater than 0.9 μm. If the average particle diameter is greater than 1.3 μm, the aluminum hydroxide becomes a fracture nucleus, so that abrasion resistance tends to decrease. In the present specification, the average particle diameter (D50) is a particle diameter at a cumulative mass value of 50% of a particle diameter distribution curve obtained by a particle diameter distribution measuring apparatus.

The aluminum hydroxide according to the present embodiment has an average particle diameter (D50) within the above range and contains a certain amount of particles having a particle diameter not less than 3.0 μm. The amount of aluminum hydroxide particles having a particle diameter not less than 3.0 μm, in 100 parts by mass of the aluminum hydroxide, is not less than 10% by mass, preferably not less than 12% by mass, and more preferably not less than 14% by mass. The amount is not particularly limited as long as the average particle diameter (D50) of the aluminum hydroxide is within the above range, but the amount is preferably not greater than 30% by mass, more preferably not greater than 28% by mass, and further preferably not greater than 26% by mass.

The amount of the aluminum hydroxide per 100 parts by mass of the diene-based rubber component is not less than 1 part by mass, preferably not less than 2 parts by mass, and more preferably not less than 3 parts by mass. If the amount of the aluminum hydroxide is less than 1 part by mass, the effect of improving wet grip performance tends to be low. The amount of the aluminum hydroxide is less than 10 parts by mass, preferably less than 9 parts by mass, and more preferably less than 8 parts by mass. If the amount of the aluminum hydroxide is not less than 10 parts by mass, abrasion resistance tends to decrease.

<Other Components>

In addition to the above rubber component and the above aluminum hydroxide, the rubber composition according to the present embodiment can contain, as necessary, compounding ingredients and additives that are conventionally used in the tire industry, for example, a filler other than the above aluminum hydroxide, a softener, a wax, an antioxidant, stearic acid, zinc oxide, a vulcanizing agent such as sulfur, a vulcanization accelerator, etc.

As the filler, another filler may be further used in addition to the aluminum hydroxide. Such a filler is not particularly limited, and, for example, any of fillers that are generally used in this field, such as carbon black, silica, alumina (aluminum oxide), calcium carbonate, talc, and clay, can be used. One of these fillers may be used individually, or two or more of these fillers may be used in combination.

As the carbon black, one that is generally used in the rubber industry can be used as appropriate. Examples of the carbon black include furnace black, acetylene black, thermal black, channel black, and graphite. Specifically, N110, N115, N120, N125, N134, N135, N219, N220, N231, N234, N293, N299, N326, N330, N339, N343, N347, N351, N356, N358, N375, N539, N550, N582, N630, N642, N650, N660, N683, N754, N762, N765, N772, N774, N787, N907, N908, N990, N991, etc., can be suitably used. Other than these, products synthesized by Sumitomo Rubber Industries, Ltd. can also be suitably used. One of these carbon blacks may be used individually, or two or more of these carbon blacks may be used in combination.

From the viewpoint of wet grip performance and abrasion resistance, the nitrogen adsorption specific surface

area (N$_2$SA) of the carbon black is preferably not less than 80 m$^2$/g, more preferably not less than 90 m$^2$/g, and further preferably not less than 100 m$^2$/g. The upper limit of the N$_2$SA of the carbon black is not particularly limited, but, from the viewpoint of processability, the N$_2$SA of the carbon black is preferably not greater than 180 m$^2$/g, more preferably not greater than 160 m$^2$/g, and further preferably not greater than 150 m$^2$/g. In the present specification, the N$_2$SA of the carbon black is a value measured according to JIS K 6217-2 "Carbon black for rubber industry-Fundamental characteristics-Part 2: Determination of specific surface area-Nitrogen adsorption methods-Single-point procedures".

In the case where carbon black is contained, from the viewpoint of abrasion resistance, the amount of the carbon black per 100 parts by mass of the rubber component is preferably not less than 1 part by mass, more preferably not less than 3 parts by mass, and further preferably not less than 5 parts by mass. The upper limit of the amount of the carbon black is not particularly limited, but, from the viewpoint of low fuel consumption performance and processability, the amount of the carbon black is preferably not greater than 100 parts by mass, more preferably not greater than 80 parts by mass, further preferably not greater than 60 parts by mass, and particularly preferably not greater than 30 parts by mass.

From the viewpoint that good wet grip performance, low fuel consumption performance, and reinforcing effect are achieved, silica is preferably contained as a filler. The silica is not particularly limited, but examples of the silica include silica prepared by a dry process (silicic anhydride) and silica prepared by a wet process (hydrous silicic acid). Between them, silica prepared by a wet process is preferable for the reason that it has a higher silanol group content and has many reactive points that are reactive with a silane coupling agent.

From the viewpoint of reinforcing effect, the nitrogen adsorption specific surface area (N$_2$SA) of the silica is preferably not less than 50 m$^2$/g and more preferably not less than 100 m$^2$/g. From the viewpoint of processability, etc., the N$_2$SA of the silica is preferably not greater than 250 m$^2$/g and more preferably not greater than 200 m$^2$/g. In the present specification, the N$_2$SA of the silica is a value measured by the BET method according to ASTM D3037-93.

In the case where silica is contained, from the viewpoint of wet grip performance, low fuel consumption performance, and reinforcing effect, the amount of the silica per 100 parts by mass of the diene-based rubber component is preferably not less than 70 parts by mass, more preferably not less than 80 parts by mass, and further preferably not less than 85 parts by mass. From the viewpoint of fracture resistance, durability, processability, etc., the amount of the silica is preferably not greater than 200 parts by mass, more preferably not greater than 180 parts by mass, further preferably not greater than 160 parts by mass, and particularly preferably not greater than 150 parts by mass.

From the viewpoint of reinforcement and wet grip performance, the amount of the entire filler per 100 parts by mass of the rubber component is preferably not less than 75 parts by mass, more preferably not less than 85 parts by mass, and further preferably not less than 100 parts by mass. From the viewpoint of dispersibility of the silica and from the viewpoint of processability, the amount of the entire filler is preferably not greater than 200 parts by mass, more preferably not greater than 180 parts by mass, further preferably not greater than 160 parts by mass, and particularly preferably not greater than 150 parts by mass.

From the viewpoint of low fuel consumption performance and wet grip performance, the amount of the silica in the filler is preferably not less than 50% by mass, more preferably not less than 70% by mass, and further preferably not less than 80% by mass.

The silica is preferably used in combination with a silane coupling agent. The silane coupling agent is not particularly limited, and any silane coupling agent that is conventionally used in combination with silica in the rubber industry can be used. Specific examples of the silane coupling agent include: silane coupling agents each having a sulfide group such as bis(3-triethoxysilylpropyl)tetrasulfide, bis(2-triethoxysilylethyl)tetrasulfide, bis(4-triethoxysilylbutyl)tetrasulfide, bis(3 -trimethoxysilylpropyl)tetrasulfide, bis(2-trimethoxysilylethyl)tetrasulfide, bis(4-trimethoxysilylbutyl)tetrasulfide, bis(3-triethoxysilylpropyl)trisulfide, bis(2-triethoxysilylethyl)trisulfide, bis(4-triethoxysilylbutyl)trisulfide, bis(3 -trimethoxysilylpropyl)trisulfide, bis(2-trimethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3 -trimethoxysilylpropyl)disulfide, bis(2-trimethoxysilylethyl)disulfide, bis(4-trimethoxysilylbutyl)disulfide, 3 -trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 2-trimethoxysilylethyl-N,N-dimethylthiocarbamoyl tetrasulfide, 3-trimethoxysilylpropyl benzothiazolyl tetrasulfide, 3-triethoxysilylpropyl benzothiazole tetrasulfide, and 3-trimethoxysilylpropyl methacrylate monosulfide; silane coupling agents each having a mercapto group such as 3-mercaptopropyltrimethoxysilane, 3-mercaptopropyltriethoxysilane, 2-mercaptoethyltrimethoxysilane, and 2-mercaptoethyltriethoxysilane; silane coupling agents each having a thioester group such as 3-octanoylthio-1-propyltriethoxysilane, 3-hexanoylthio-1-propyltriethoxysilane, and 3-octanoylthio-1-propyltrimethoxysilane; silane coupling agents each having a vinyl group such as vinyltriethoxysilane; silane coupling agents each having an amino group such as 3-aminopropyltriethoxysilane; silane coupling agents each having a glycidoxy group such as γ-glycidoxypropyltriethoxysilane; silane coupling agents each having a nitro group such as 3-nitropropyltrimethoxysilane; and silane coupling agents each having a chloro group such as 3-chloropropyltrimethoxysilane. One of these silane coupling agents may be used individually, or two or more of these silane coupling agents may be used in combination.

In the case where a silane coupling agent is contained, from the viewpoint of silica dispersibility, the amount of the silane coupling agent per 100 parts by mass of the silica is preferably not less than 1 part by mass, more preferably not less than 3 parts by mass, and further preferably not less than 5 parts by mass. From the viewpoint of reinforcing effect and wet grip performance, the amount of the silane coupling agent is preferably not greater than 20 parts by mass, more preferably not greater than 15 parts by mass, and further preferably not greater than 10 parts by mass.

The softener is not particularly limited as long as it is one that is conventionally and generally used in the rubber industry. Examples of the softener include liquid polymers and oils including mineral oils such as aromatic oil, process oil, and paraffin oil, and the softener can be selected as appropriate therefrom.

In the case where an oil is contained, from the viewpoint of preventing a decrease in abrasion resistance, the amount of the oil per 100 parts by mass of the rubber component is preferably not greater than 100 parts by mass and more preferably not greater than 80 parts by mass. From the viewpoint of processability, the amount of the oil is preferably not less than 5 parts by mass and more preferably not less than 10 parts by mass.

In the case where a wax is contained, from the viewpoint of inhibiting degradation of the rubber, the amount of the wax per 100 parts by mass of the rubber component is preferably not less than 0.5 parts by mass and more preferably not less than 1 part by mass. From the viewpoint of preventing whitening of a tire due to blooming of the wax on the surface of the tire, the amount of the wax is preferably not greater than 10 parts by mass and more preferably not greater than 5 parts by mass.

In the case where an antioxidant is contained, from the viewpoint of inhibiting degradation of the rubber, the amount of the antioxidant per 100 parts by mass of the rubber component is preferably not less than 0.5 parts by mass and more preferably not less than 1 part by mass. From the viewpoint of preventing color change of a tire due to blooming of the antioxidant on the surface of the tire, the amount of the antioxidant is preferably not greater than 10 parts by mass and more preferably not greater than 5 parts by mass.

In the case where stearic acid is contained, from the viewpoint of increasing a vulcanization rate of the rubber and increasing the productivity of a tire, the amount of the stearic acid per 100 parts by mass of the rubber component is preferably not less than 0.5 parts by mass and more preferably not less than 1 part by mass. From the viewpoint of preventing a decrease in abrasion resistance, the amount of the stearic acid is preferably not greater than 8 parts by mass and more preferably not greater than 5 parts by mass.

In the case where zinc oxide is contained, from the viewpoint of increasing a vulcanization rate of the rubber and increasing the productivity of a tire, the amount of the zinc oxide per 100 parts by mass of the rubber component is preferably not less than 0.5 parts by mass and more preferably not less than 1 part by mass. From the viewpoint of preventing a decrease in abrasion resistance, the amount of the zinc oxide is preferably not greater than 8 parts by mass and more preferably not greater than 5 parts by mass.

In the case where sulfur is contained as a vulcanizing agent, from the viewpoint of ensuring a sufficient vulcanization reaction and achieving good wet grip performance and abrasion resistance, the amount of the sulfur per 100 parts by mass of the rubber component is preferably not less than 0.5 parts by mass and more preferably not less than 1 part by mass. The amount of the sulfur is preferably not greater than 3 parts by mass for the reason that a decrease in wet grip performance and abrasion resistance due to blooming is inhibited.

Examples of the vulcanization accelerator include sulfenamide-based vulcanization accelerators, thiazole-based vulcanization accelerators, thiuram-based vulcanization accelerators, thiourea-based vulcanization accelerators, guanidine-based vulcanization accelerators, dithiocarbamic acid-based vulcanization accelerators, aldehyde-amine-based vulcanization accelerators, aldehyde-ammonia-based vulcanization accelerators, imidazoline-based vulcanization accelerators, and xanthate-based vulcanization accelerators. These vulcanization accelerators may be used individually, or two or more of these vulcanization accelerators may be used in combination. Among them, for the reason that vulcanization characteristics are excellent and low fuel consumption performance as a physical property of the rubber after vulcanization is excellent, sulfenamide-based vulcanization accelerators are preferable, and examples thereof include N-tert-butyl-2-benzothiazolyl sulfenamide (TBBS), N-cyclohexyl-2-benzothiazolyl sulfenamide (CZ), and N,N'-dicyclohexyl-2-benzothiazolyl sulfenamide (DZ).

In the case where a vulcanization accelerator is contained, from the viewpoint of vulcanization acceleration, the amount of the vulcanization accelerator per 100 parts by mass of the rubber component is preferably not less than 0.1 parts by mass and more preferably not less than 0.5 parts by mass. From the viewpoint of processability, the amount of the vulcanization accelerator is preferably not greater than 5 parts by mass and more preferably not greater than 4 parts by mass.

<Rubber Composition and Tire>

As a method for producing the rubber composition of the present embodiment, a known method can be used. For example, the rubber composition can be produced by a method in which the above respective components are kneaded by a Banbury mixer, a kneader, an open roll, or the like and then vulcanization is performed.

The rubber composition of the present embodiment obtained in this manner can be used not only for use in tires such as treads, under treads, carcasses, sidewalls, and beads of tires, but also for rubber vibration isolators, belts, hoses, other industrial products, etc. In particular, since wet grip performance and abrasion resistance can be improved, a tire having a tread formed from the rubber composition of the present embodiment is preferably made.

A tire according to the present embodiment can be produced by a normal method using the rubber composition of the present embodiment. Specifically, the tire of the present embodiment can be produced by extruding the rubber composition of the present embodiment, in which the above compounding ingredients are blended into the rubber component as necessary, in an unvulcanized state so as to correspond to the shape of a tread, attaching the extruded rubber composition together with other tire members on a tire forming machine, shaping these members by a normal method to form an unvulcanized tire, and heating and pressing the unvulcanized tire in a vulcanizing machine. In addition, the tire of the present embodiment can be used as a tire for a passenger car, a tire for a bus, a tire for a truck, a tire for racing, etc., but can be particularly suitably used as a high-performance wet tire for racing.

EXAMPLES

The present invention will be described by means of examples below, but the present invention is not limited to these examples.

Various chemicals used in examples and comparative examples are collectively described below.

SBR: Nipol 1502 (E-SBR, styrene content: 23.5% by mass, vinyl content: 18% by mass, Mw: 500 thousand) manufactured by Zeon Corporation.
BR: UBEPOL BR 150B (high-cis BR, cis-1,4 bond content: 96%, Mw: 440 thousand) manufactured by Ube Industries, Ltd.
Carbon black: Show Black N220 ($N_2SA$: 111 $m^2/g$) manufactured by Cabot Japan K.K.
Silica: Ultrasil VN3 ($N_2SA$: 175 $m^2/g$) manufactured by Evonik Degussa GmbH.
Silane coupling agent: Si69 (bis(3-triethoxysilylpropyl)tetrasulfide) manufactured by Evonik Degussa GmbH.
Oil: Diana Process NH-60 manufactured by Idemitsu Kosan Co., Ltd.
Wax: OZOACE 0355 manufactured by NIPPON SEIRO CO., LTD.
Antioxidant: ANTIGENE 6C (N-(1,3-dimethylbutyl)-N'-phenyl-p-phenylenediamine) manufactured by Sumitomo Chemical Co., Ltd.
Stearic acid: stearic acid "Tsubaki" manufactured by NOF Corporation
Zinc oxide: "Ginrei R" manufactured by Toho Zinc Co., Ltd.
Sulfur: HK-200-5 (powdery sulfur containing 5% of oil) manufactured by Hosoi Chemical Industry Co., Ltd.
Vulcanization accelerator: Nocceler NS (N-tert-butyl-2-benzothiazolylsulfenamide) manufactured by Ouchi Shinko Chemical Industrial Co., Ltd.

The average particle diameters (D50) and the particle diameter distributions of aluminum hydroxides 1 to 3 were calculated from values measured using a laser diffraction/scattering particle diameter distribution measuring apparatus (Partica LA-950V2, manufactured by HORIBA, Ltd.) (Table 1).

[Table 1]

Table 1

| | Average particle diameter (D50) (μm) | Amount of particles having particle diameter not less than 3.0 μm (% by mass) |
|---|---|---|
| Aluminum hydroxide 1 | 0.7 | 20 |
| Aluminum hydroxide 2 | 0.7 | 5 |
| Aluminum hydroxide 3 | 1.5 | 30 |

Examples 1 to 3 and Comparative Examples 1 to 4

In accordance with each of the blending formulas shown in Table 2, the above various chemicals (excluding the sulfur and the vulcanization accelerator) were kneaded in a Banbury mixer at a discharge temperature of 150°C for 5 minutes to obtain a kneaded product. Next, the sulfur and the vulcanization accelerator were added to the obtained kneaded product and the mixture was kneaded at a discharge temperature of 100°C for 3 minutes using an open roll, to obtain an unvulcanized rubber composition. The obtained unvulcanized rubber composition was formed into the shape of a tread, and was attached together with other tire members on a tire forming machine to form an unvulcanized tire. The unvulcanized tire was press-vulcanized under a condition of 170°C for 10 minutes, whereby a test tire (size: 195/65R15, a tire for a passenger car) was produced.

The obtained test tires were evaluated by the following test methods. The test results of the respective test tires are shown in Table 2.

<Wet Grip Performance>

The respective test tires were mounted to all the wheels of a vehicle (a front wheel drive vehicle with an engine displacement of 2000 cc, produced in Japan), and a braking distance from an initial speed of 100 km/h was obtained on a wet asphalt road surface. The results are indicated as indexes. A higher index indicates that the wet grip performance is better. Each index was obtained by the following equation.

$$(\text{Wet grip performance index}) =$$
$$(\text{braking distance of Comparative Example 1}) / (\text{braking distance of each blending example}) \times 100$$

<Abrasion Resistance>

The test tires having a size of 195/65R15 were mounted to a front wheel drive vehicle produced in Japan, the groove depth in the tire tread portion was measured after running for 8000 km, and a running distance when the tire groove depth was reduced by 1 mm was obtained. The results are indicated as indexes. A higher index indicates that the abrasion resistance is better. Each index was obtained by the following equation.

$$(\text{Abrasion resistance index}) = (\text{running distance at which tire groove in each blending example was reduced by 1 mm}) / (\text{running distance at which tire groove in Comparative Example 1 was reduced by 1 mm}) \times 100$$

[Table 2]

Table 2

| | | Example | | | Comparative Example | | | |
|---|---|---|---|---|---|---|---|---|
| | | 1 | 2 | 3 | 1 | 2 | 3 | 4 |
| Blending amount (parts by mass) | SBR | 80 | 80 | 80 | 80 | 80 | 80 | 80 |
| | BR | 20 | 20 | 20 | 20 | 20 | 20 | 20 |
| | Carbon black | 10 | 10 | 10 | 10 | 10 | 10 | 10 |
| | Aluminum hydroxide 1 | 3.0 | 5.0 | 8.0 | - | - | 10 | - |
| | Aluminum hydroxide 2 | - | - | - | 5.0 | - | - | - |
| | Aluminum hydroxide 3 | - | - | - | - | 5.0 | - | - |
| | Silica | 90 | 90 | 90 | 90 | 90 | 90 | 90 |
| | Silane coupling agent | 7.2 | 7.2 | 7.2 | 7.2 | 7.2 | 7.2 | 7.2 |
| | Oil | 10 | 10 | 10 | 10 | 10 | 10 | 10 |
| | Wax | 2.0 | 2.0 | 2.0 | 2.0 | 2.0 | 2.0 | 2.0 |
| | Antioxidant | 2.0 | 2.0 | 2.0 | 2.0 | 2.0 | 2.0 | 2.0 |
| | Stearic acid | 2.0 | 2.0 | 2.0 | 2.0 | 2.0 | 2.0 | 2.0 |
| | Zinc oxide | 2.0 | 2.0 | 2.0 | 2.0 | 2.0 | 2.0 | 2.0 |
| | Sulfur | 1.0 | 1.0 | 1.0 | 1.5 | 1.5 | 1.0 | 1.0 |
| | Vulcanization accelerator | 2.0 | 2.0 | 2.0 | 1.0 | 1.0 | 2.0 | 2.0 |
| Index | Wet grip performance index | 105 | 108 | 110 | 100 | 105 | 110 | 90 |
| | Abrasion resistance index | 105 | 100 | 100 | 100 | 95 | 95 | 110 |

From the results in Table 2, it is found that the pneumatic tire having the tread formed from the rubber composition for a tread of the present invention in which aluminum hydroxide having a specific average particle diameter and particle diameter distribution is blended into a diene-based rubber component, has excellent wet grip performance and abrasion resistance in a balanced manner.

Claims

1. A rubber composition for a tread, the rubber composition containing:

diene-based rubber; and
aluminum hydroxide having an average particle diameter (D50) of 0.6 to 1.3 $\mu$m and containing 10% by mass or greater of particles having a particle diameter not less than 3.0 $\mu$m,
wherein the aluminum hydroxide is contained in an amount that is not less than 1 part by mass and is less than 10 parts by mass per 100 parts by mass of the diene-based rubber.

2. The rubber composition for a tread according to claim 1, wherein the diene-based rubber contains 10% by mass or greater of butadiene rubber.

3. The rubber composition for a tread according to claim 1 or 2, further containing 80 parts by mass or greater of silica per 100 parts by mass of the diene-based rubber.

4. A pneumatic tire having a tread formed from the rubber composition for a tread according to any one of claims 1 to 3.

Patentansprüche

1. Kautschukzusammensetzung für eine Lauffläche, wobei die Kautschukzusammensetzung enthält:

Kautschuk auf Dien-Basis; und
Aluminiumhydroxid mit einem durchschnittlichen Partikeldurchmesser (D50) von 0,6 bis 1,3 $\mu$m und enthaltend 10 Masse-% oder mehr an Partikeln mit einem Partikeldurchmesser von nicht weniger als 3,0 $\mu$m,

wobei das Aluminiumhydroxid in einer Menge enthalten ist, die nicht weniger als 1 Massenteil und weniger als 10 Massenteile pro 100 Massenteile des Kautschuks auf Dien-Basis beträgt.

**2.** Kautschukzusammensetzung für eine Lauffläche nach Anspruch 1, wobei der Kautschuk auf Dien-Basis 10 Massen-% oder mehr Butadienkautschuk enthält.

**3.** Kautschukzusammensetzung für eine Lauffläche nach Anspruch 1 oder 2, ferner enthaltend 80 Massenteile oder mehr Siliciumdioxid pro 100 Massenteile des Kautschuks auf Dien-Basis.

**4.** Luftreifen mit einer Lauffläche, die aus der Kautschukzusammensetzung für eine Lauffläche nach einem der Ansprüche 1 bis 3 gebildet ist.

**Revendications**

**1.** Composition de caoutchouc pour bande de roulement, la composition de caoutchouc comprenant :

un caoutchouc à base diénique ; et
de l'hydroxyde d'aluminium ayant un diamètre particulaire moyen (D50) de 0,6 à 1,3 $\mu$m et comprenant 10 % en masse ou plus de particules ayant un diamètre particulaire non inférieur à 3,0 $\mu$m,
dans laquelle l'hydroxyde d'aluminium est compris dans une quantité qui n'est pas inférieure à 1 partie en masse et est inférieure à 10 parties en masse pour 100 parties en masse de caoutchouc à base diénique.

**2.** Composition de caoutchouc pour bande de roulement selon la revendication 1, dans laquelle le caoutchouc à base diénique comprend 10 % en masse ou plus de caoutchouc butadiène.

**3.** Composition de caoutchouc pour bande de roulement selon la revendication 1 ou la revendication 2, comprenant en outre 80 parties en masse ou plus de silice pour 100 parties en masse de caoutchouc à base diénique.

**4.** Pneu ayant une bande de roulement formée à partir de la composition de caoutchouc pour bande de roulement selon l'une quelconque des revendications 1 à 3.

EP 3 575 356 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4559573 B